# EUROPEAN PATENT SPECIFICATION

(11) **EP 4 151 075 B1**
(45) Date of publication and mention of the grant of the patent: **23.07.2025**
(21) Application number: 22191967.3
(22) Date of filing: 24.08.2022
(51) Int. Cl.: A01F 15/07, A01F 15/08

(54) **BALER**
BALLENPRESSE
RAMASSEUSE-PRESSE

(30) Priority: 17.09.2021 GB 202113306
(43) Date of publication of application: 22.03.2023
(73) Proprietor: Kuhn-Geldrop B.V., 5667 KP Geldrop (NL)
(72) Inventor: van Doormaal, Thomas, Petrus, Lambertus, NL-5089NK Haghorst (NL)
(74) Representative: Murgitroyd & Company

(56) References cited:
- US-A1- 2012 240 527
- US-A1- 2018 295 780

## Description

The present invention relates to a baler that is configured to form a round bale and bind the bale by applying a binding material to a circumferential surface of the bale.

In particular but not exclusively, the invention relates to an agricultural baler that makes round bales having a pair of circular end faces and a cylindrical circumferential surface. Such balers are generally referred to as "round balers". Typically, a round baler has a bale chamber in which the bale is formed and a binding mechanism that binds the bale by applying a binding material to the circumferential surface of the bale. The binding material, which may be stretch film or netting, binds the bale to prevent expansion of the compressed bale material after the bale is ejected from the bale chamber.

A round baler is typically configured to form a bale by implementing a baling process that includes a bale-forming phase in which a bale is formed, a binding phase in which the bale is bound with a binding material, and a cutting phase in which the binding material is cut, after which the bound bale may be ejected from the bale chamber.

During the bale-forming phase crop material is fed into the bale chamber and rotated by rotating pressing elements to form a bale. When the bale has reached a desired size or pressure the baler enters the binding phase in which a leading end of the binding material is presented to the outer surface of the bale. The binding material is then wrapped once or more around the circumference of the bale by feeding the binding material into the bale chamber while rotating the bale. After binding has been completed the supply of binding material is severed in the cutting phase and the bound bale is then either ejected from the bale chamber or wrapped within the opened bale chamber.

An apparatus for applying a binding material to the outer surface of an agricultural bale is described in EP1776860A1. This apparatus has a cycle of operation in which the leading end of the binding material is presented to the outer surface of the bale when the bale has reached a required size, the binding material is wrapped at least once around the bale (typically 2-3 times for netting or 4-5 times for film), and the supply of binding material from the apparatus to the bale is severed when binding of the bale has been completed. The binding mechanism includes a supply device for a supply of binding material and a feed mechanism that feeds the binding material from the supply device to the bale chamber. The feed mechanism includes a pull-off device that draws binding material from the supply reel and a feed mouth that feeds and guides the binding material to the outer surface of the bale. The feed mouth is moveable between an operative feeding position near to the outer surface of the bale where the binding material is presented by the feed mouth to the outer surface of the bale, and a retracted position which the feed mouth takes up when binding has been completed so that the binding material can be severed.

US2012/0240527 describes an apparatus for tensioning wrap material in a baler, comprising a brake configured to slow the payoff of wrap material from a reel of wrap material and a controller that manipulates the brake. The apparatus enables a degree of passive control over the speed at which the wrap material is delivered to the bale chamber.

Lately, the demand for silage bales that are bound with stretch film instead of net binding material has increased, owing to the fact that if the bales are subsequently wrapped for full coverage with stretch film only one type of material is used for both binding and wrapping. Then, when the bale is to be used as silage, the film binding material and the film wrapping can be peeled off in one operation and can be more easily disposed of or recycled, as they do not need to be separated.

Film binding material needs to be stretched before it is fed into the bale chamber to provide a tight binding on the bale and to economise on film usage. The binding mechanism includes a supply device for a supply of binding material, and a feed mechanism that feeds the binding material from the supply device to the bale chamber. The supply device typically includes a pre-stretcher that stretches the film binding material lengthwise by about 55-75%.

Additional stretching is usually provided between the feed mechanism and the bale chamber. The feed mechanism may for example include a pull-off device comprising a driven feed roller that feeds the film from the supply device to the bale chamber at a feed speed that is less than the circumferential speed of the bale as it rotates in the bale chamber. As a result, the film binding material is additionally stretched lengthwise between the feed mechanism and the bale chamber, typically by about 5-15%.

As the film binding material is highly stretched during the binding phase, when the film is subsequently severed during the cutting phase the stretched film contracts and may spring back rapidly. As a result the severed end of film can be flung back and get caught up in the feed mouth or around rotating parts of the feed mechanism, causing a blockage that has to be cleared before binding can recommence.

A high degree of stretching is desirable to ensure that the bale is tightly bound and to economise on film usage. However, the risk of a blockage increases as stretching of the film is increased, owing to the increased tension in the film. This imposes a practical limit on the amount of stretching that can be applied to the film.

This problem may also be present when net binding material is used, but generally to a lesser degree as net binding material is not usually highly stretched during binding. However, it is still desirable to control the amount that the binding material springs back, even when net binding material is used. Therefore, reducing the risk of the binding material springing back after it has been cut may be important both for film binding material and net binding material, even though it is generally more important for film binding material.

It is an object of the present invention to provide a baler that mitigates one or more of the aforementioned problems.

According to an aspect the present invention there is provided a baler in accordance with claim 1.

According to the present invention there is provided a baler configured to form a round bale by implementing a baling process that includes a bale-forming phase in which a bale is formed, a binding phase in which the bale is bound with a binding material, and a cutting phase in which the binding material is cut, the baler comprising:
a bale chamber in which a bale is formed during the bale-forming phase,
a bale chamber in which a bale is formed during the bale-forming phase,
a bale drive mechanism that rotates the bale in the bale chamber with a circumferential speed SB,
a binding mechanism that binds a bale in the bale chamber during the binding phase by wrapping a binding material around a circumferential surface of bale, and
a cutter device that cuts the binding material during the cutting phase,
the binding mechanism including:
   a supply device that holds a supply of binding material and
   a feed mechanism that feeds the binding material from the supply device to the bale chamber,
   wherein the feed mechanism includes at least one pull-off device that draws binding material from the supply device and feeds the binding material to the bale chamber, wherein the pull-off device comprises a rotary drive element and a rotary drive that drives rotation of the rotary drive element, and wherein the pull-off device is configured to feed the binding material at a first feed speed S1 during at least a part of the binding phase and at a second feed speed S2 during the cutting phase, where S2 is greater than S1 and S2 is greater than the circumferential speed SB of the bale during the cutting phase.

The rotary drive actively drives rotation of the rotary drive element during at least part of the binding phase and the cutting phase, thus ensuring that the binding material is drawn from the supply device and fed to the bale chamber at a controlled speed during both phases of the binding process. This avoids problems associated with prior art balers where the speed at which binding material is drawn from the supply device and fed to the bale chamber is controlled only passively, for example by braking the reel of binding material.

Optionally, the second feed speed S2 is equal to E*S1 where E is a coefficient in the range 1.2 to 4.0.

Increasing the feed speed of the binding material from S1 to S2 during the cutting phase, before the binding material is cut, reduces the tension in the binding material and reduces the risk that it can spring back in an uncontrolled fashion, potentially causing a blockage within the feed mechanism. The reliability of the baler can thus be improved.

This also allows the amount of pre-stretching of the binding material during the binding phase to be increased, thereby increasing the tension in the binding to bind the bale more tightly and reducing the consumption of binding material.

Optionally, the circumferential speed SB of the bale during the binding process is greater than S1. Rotating the bale at a circumferential speed SB that is greater than the feed speed S1 during the binding phase causes stretching of the binding material between the pull-off device and the bale chamber, in addition to any stretching that may have been applied to the binding material previously.

Optionally, the circumferential speed SB of the bale during the binding process is equal to D*S1 where D is a coefficient in the range 1.5 to 2.5. This is equivalent to an increase in the length of the binding material of 50% to 150%.

Optionally, S2 is equal to F multiplied by the circumferential speed SB of the bale during the cutting phase, where F is a coefficient in the range 1.05 to 1.25. In other words, the second feed speed S2 during the cutting phase, before cutting, may be 5% to 25% faster than the circumferential speed SB of the bale during the binding phase.

Optionally, the pull-off device is configured to feed the binding material at a third feed speed S3 during at least one different part of the binding phase, where S3 is different from S1. In other words, the pull-off device may be operable to adjust the tension in the binding material during different parts of the binding process in order to control various properties of the binding.

As noted above, the pull-off device may be operable to adjust the tension in the binding material during different parts of the binding process in order to control various properties of the binding. For example, the baler may be configured to apply one or more layers of binding material at a first tension level then one or more further layers of binding material at a second, higher tension level to bind the bale more tightly and reduce the amount of binding material used. Alternatively, the tension may be reduced for the outermost layer or layers, to reduce the risk of tearing or unwinding. The rotary drive actively drives rotation of the rotary drive element during at least part of the binding phase and the cutting phase, thus ensuring that the binding material is drawn from the supply device and fed to the bale chamber at a controlled speed during both phases of the binding process.

Optionally, the pull-off device is configured to feed the binding material at a fourth feed speed S4 during a feeding phase of the baling process, during which a cut end of the binding material is introduced into the bale chamber prior to the binding phase. The fourth feed speed S4 may for example be equal to or slightly less than the speed at which a feed device carries a cut end of the binding material to the bale chamber, which may be useful to control the position of the cut end as it is introduced into the bale chamber. S4 may also be slower than the circumferential speed of the bale S4, for example approximately 0.5*SB.

Optionally, the baler includes a controller that controls operation of the pull-off device during each phase of the baling process. The controller may for example be a computer or other electronic control device.

Optionally, the controller includes an operator interface that allows an operator to adjust one or more of the feed speeds of the pull-off device. The operator interface may optionally include a display and one or more operator controls, and/or a touch-sensitive display.

The pull-off device comprises a rotary drive element that draws the binding material from the supply device, for example a drive roller or a pair of rollers, and a rotary drive that drives rotation of the rotary drive element. The rotary drive may comprise a rotating component of the baler or it may be a separate drive motor, for example an electric or hydraulic motor.

Optionally, the rotary drive comprises a clutch that transfers rotary drive to the rotary drive element, wherein the clutch is configured to control the feed speeds of the pull-off device by adjusting slippage within the clutch. This allows the clutch to drive the pull-off device at different drive speeds without changing the input speed of the rotary drive.

Optionally, the clutch is an electromagnetic clutch in which slippage is controlled by a PWM control signal delivered to the electromagnetic clutch. The amount of slippage can for example be determined by a controller or it may be selected by an operator.

Optionally, the supply device includes a pre-stretcher device that stretches the binding material before it reaches the feed mechanism.

Optionally, the pre-stretcher device is configured to stretch the binding material lengthwise by a factor in the range 1.55 to 1.75.

Optionally, the pre-stretcher device and the feed mechanism are configured to stretch the binding material lengthwise by a combined factor in the range 1.85 to 4.0.

The binding material is a stretch film binding material.

Optionally, the feed mechanism includes a feed device between the pull-off device and the bale chamber, which is configured to transfer a cut end of the binding material to the bale chamber.

Optionally, the feed device is configured for movement relative to the supply device between a feed position adjacent a feed opening of the bale chamber, which the feed device adopts when feeding binding material into the bale chamber, and a retracted position spaced from the feed opening. The feed device may for example be configured for pivoting movement between the feed position and the retracted position.

Certain embodiments of the present invention will now be described, by way of example, with reference to the accompanying drawings, in which:
Figure 1 is an isometric view of a baler according to an embodiment of the invention, showing the front and left hand sides;
Figure 2 is an isometric view of part of the baler with its external covers removed, showing the front and the right-hand side;
Figure 3 is an isometric view of part of the baler with its external covers removed, showing the front and left-hand side;
Figures 4-7 are side views showing components of a binding apparatus according to a first embodiment of the invention in various operational positions;
Figure 8 is a schematic diagram of a control system for the baler, and
Figure 9 is an isometric view of a binding apparatus according to a second embodiment of the invention.

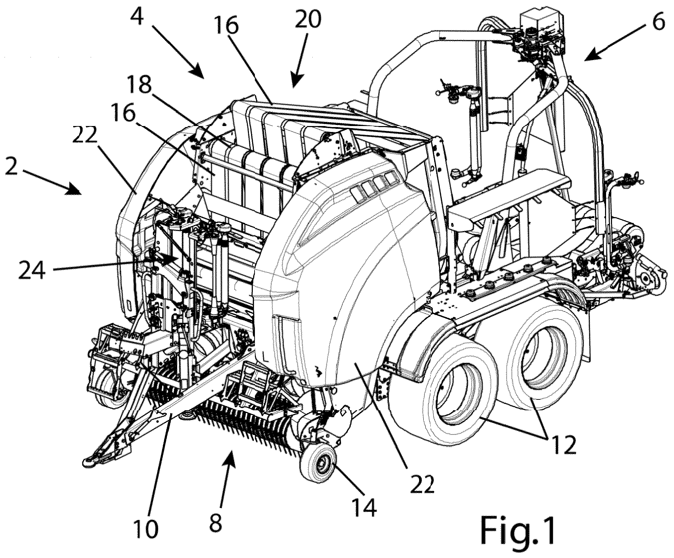

Figure 1 illustrates the main components of a round baler 2 according to an embodiment of the invention. The baler 2 may be of the variable chamber type or the fixed chamber type.

In this embodiment the baler 2 is a combined baler/wrapper machine, which includes a front section 4 where a bale is formed from bale material, and a rear section 6 where the bale is wrapped with a stretch film wrapping material. It should be noted that the invention is also applicable to balers that do not include an integrated wrapper section. In that case, bales formed by the baler 2 may optionally be wrapped subsequently using a separate wrapping machine as is well known in the art. It should also be noted that the wrapper comprising the rear section 6 may take alternative forms, as are known in the art. The wrapper illustrated is of a conventional orbital type and will not be further described.

The baler 2, which in this embodiment is of the variable chamber type, includes a pick-up device 8 for picking up bale material, for example cut straw or grass, from the ground, a drawbar 10 for attaching the baler to a tractor, support wheels 12, 14 and a plurality of press elements comprising elongate belts 16 that are guided around a set of rollers 18, 60 and/or driven press rollers 56, 62, 64. The belts 16 together with a pair of side plates (not shown) create a cylindrical bale chamber 20 in which a round bale can be formed. The pick-up device 8 is configured to feed the bale material into the bale chamber 20 through a crop mouth 21. The sides of the baler 2 are covered by covers 22. The baler may be driven, for example, via the power take off (PTO) of the tractor. Again, these components are conventional and will not be further described.

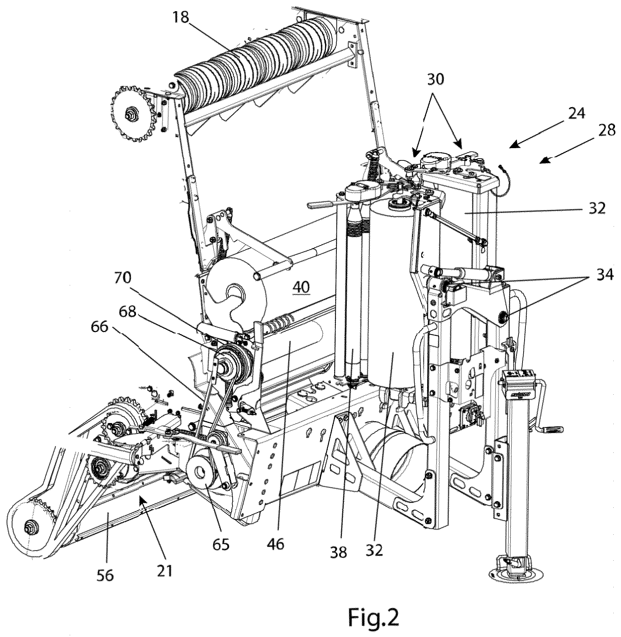

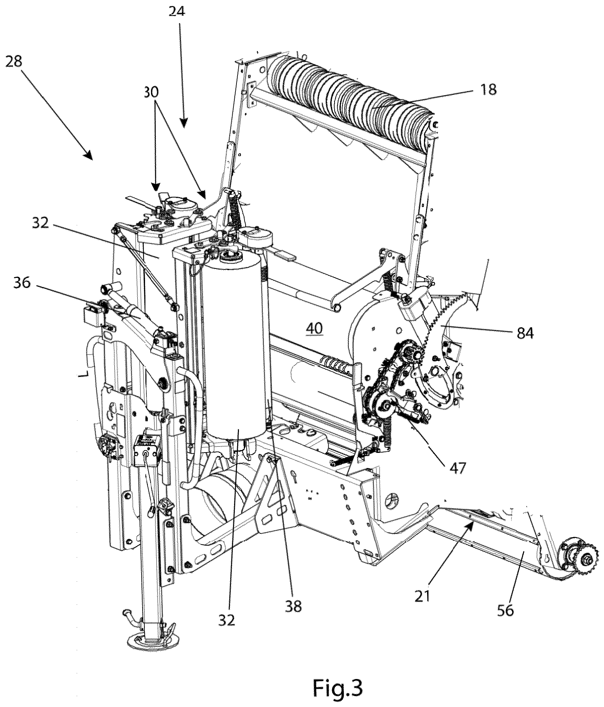

The baler also includes a binding apparatus 24 that is configured to apply a binding material, optionally a film binding material, to a cylindrical circumferential surface of the bale formed in the bale chamber to bind the bale, and a cutter device 26 that is configured to cut the film binding material after the bale has been bound. Additional components of the baler are shown in figures 2 and 3, which show the internal mechanism of the baler with the covers 22 and belts 16 removed.

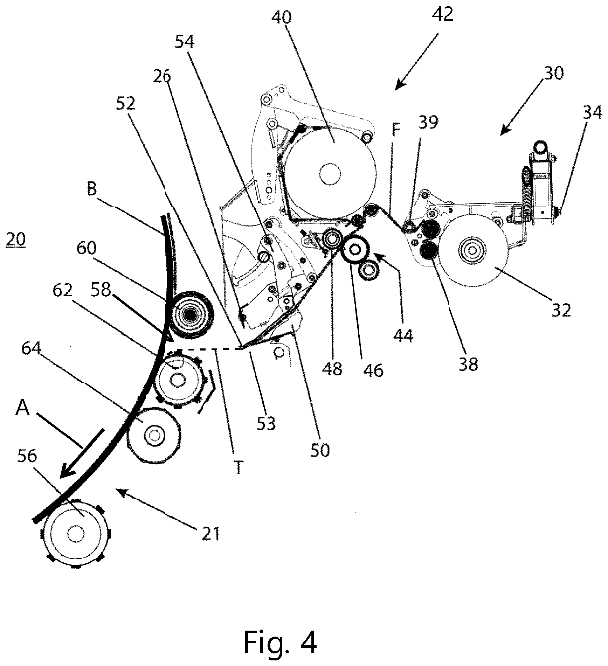

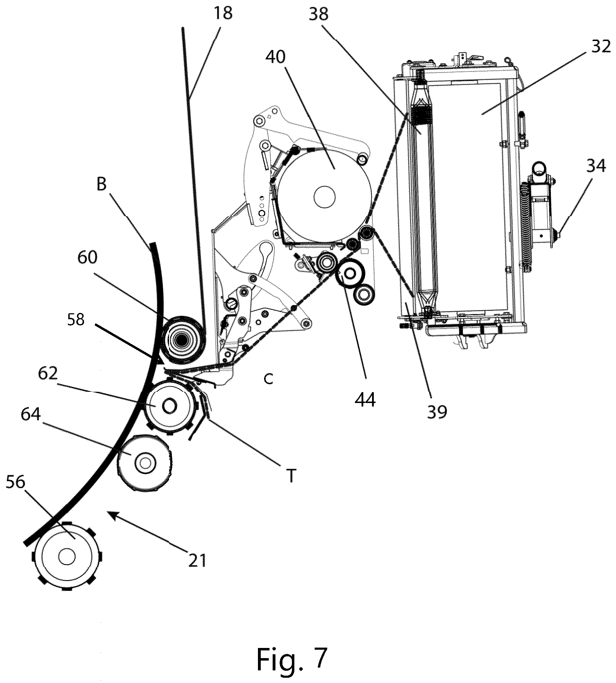

The binding apparatus 24 includes a supply device 28 for a supply 32 of film binding material. In this embodiment the supply 32 comprises two reels of film binding material, each reel being mounted on a separate support 30. In this embodiment the supports 30 are each mounted on a pivot 34 which allows the support and the associated reel to pivot through 90 degrees from a vertical bundling position shown in figures 2, 3, 5 and 6 to a horizontal binding position shown in figures 4 and 7. An actuator 36 is provided to drive rotation of the supports 30 and reels 32 between the vertical and horizontal positions. Alternatively, the reels may be mounted on a fixed supports so that they cannot be rotated to bundle the film binding material.

The supply device 28 also includes a pre-stretcher device 38 for stretching the film binding material lengthwise as it is drawn from the reel 32. The pre-stretcher device 38 may be of a conventional kind, comprising two rollers that are driven at different circumferential speeds to stretch the film binding material lengthwise as it passes around the two rollers. A freely-rotating supply guide roller 39 located after the pre-stretcher device 38 also comprises part of the supply device 28.

In this embodiment, the baler also includes a reel 40 of net binding material, which can be used instead of the film binding material if, for operational reasons, the use of net binding material is preferred. The provision of a net binding system is optional.

Further features of the binding apparatus 24 can be seen in figures 4-7. The binding apparatus 24 comprises a feed mechanism 42 that supplies film binding material F from the supply 32 to the bale chamber 20. The feed mechanism 42 includes a pull-off device 44 comprising at least one driven roller 46, which can optionally be braked by an adjustable brake 47. The pull-off device 44 may also include a freely rotating pinch roller 48 that cooperates with the driven roller 46 to grip the film F as it passes through the pinch between the rollers 46, 48. Alternatively, the pinch roller 48 may be driven or it may be omitted. The film binding material F may optionally be guided from the supply device 28 to the feed mechanism 42 by first and second freely-rotating feed guide rollers 49, 49'.

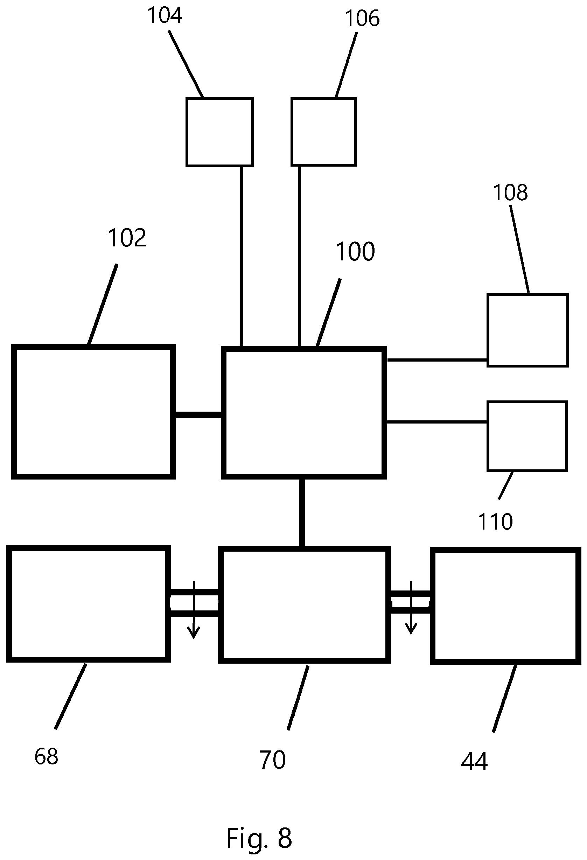

The pull-off device 44 can be actively driven from a drive pulley 65 via a drive belt 66 (see figure 2). The drive belt 66 passes around a driven pulley 68, which is connected to the driven roller 46 of the pull-off device 44 via clutch, for example an electromagnetic clutch 70. The electromagnetic clutch 70 can be controlled electronically by a control signal, for example by a pulse-width modulation (PWM) control signal, to adjust the degree of slippage between the input and output sides of the clutch 70. Alternatively, a different kind of clutch can be used that allows the slippage to be controlled. The control signal can be provided, for example, by a controller 100 (Fig. 8). The pull-off device 44 can optionally be braked by the adjustable brake 47 after the binding material has been severed, to limit or prevent further driving of the binding material by the inertia of the pull-off device 44.

As shown in Fig. 8, the controller 100 may include an operator interface 102 that allows an operator to adjust the feed speed of the pull-off device 44 by adjusting the slippage of the clutch 70 as it transfers rotary drive from the driven pulley 68 to the pull-off device 44. The controller 100 may be connected to receive sensor signals from one or more sensors including, for example, a bale speed sensor 104 that senses the circumferential speed SB of a bale as it rotates in the bale chamber and/or a feed speed sensor 106 that senses the feed speed (e.g.S1, S2, S3 and/or S4) of the binding material as it is fed by the pull-off device 44 to the bale chamber. Furthermore, the controller 100 may be connected to send control signals to one or more actuators that operate different components of the baler including, for example, a reel position actuator 108 that drives rotation of the supply reels between upright and horizontal positions to control bundling of the binding material, and/or a feed mouth actuator 110 that drives movement of a feed device between different operational positions, such as a feed position, a binding position and a cutting position.

In this embodiment the feed mechanism 42 includes an optional feed device 50, which is located after the pull-off device 44. In this embodiment the feed device 50 comprises a feed mouth with a pair of opposed feed elements, for example comprising upper and lower lips 52, 53. The lips 52, 53 can be pressed against one another to define a narrow slot through which the film binding material F passes or opened apart to provide a wider slot.

Alternatively, the feed device 50 may comprise a single feed element, for example a plate, which takes the place of the lower lip 53 (the upper lip 52 being omitted).

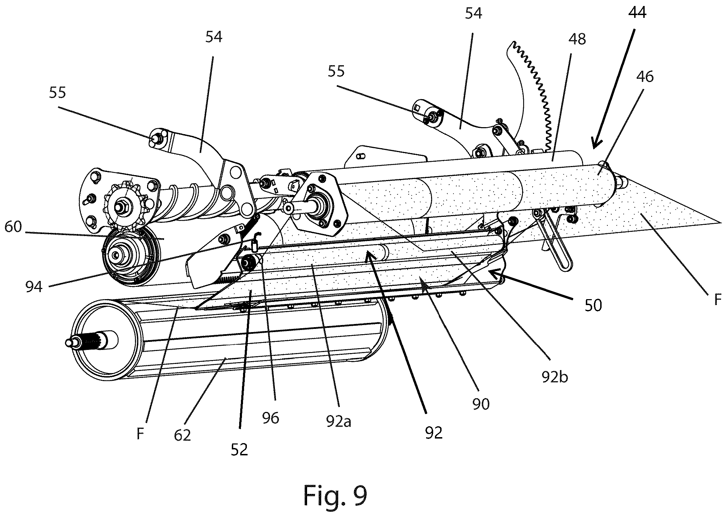

The feed device 50 is mounted on an arm 54 that can pivot about a pivot point 55 (Fig. 9). An actuator (not shown) is provided for driving pivoting movement of the pivot arm 54 and the feed device 50.

Operation of the binding apparatus is illustrated in figures 4-7. Referring first to figure 4, this shows the configuration of the binding apparatus during the binding phase, in which a binding is applied to a round bale B in the bale chamber. The film binding material F is drawn from the supply reel 32 and passes through the pre-stretcher device 38, which stretches the film lengthwise, typically by about 55-75%. As the film is elastic this pre-stretching ensures that when the film is applied to the cylindrical surface of the bale B it is in tension so that it binds the bale tightly.

Optionally, the pre-stretcher device 38 may include a stretch adjustment mechanism for adjusting the amount of pre-stretching applied to the film. The stretch adjustment mechanism may for example comprise two or more gear sets between the rollers, which can be engaged alternately to provided different relative speeds between the rollers. Alternatively, the rollers may be connected to one another by a continuously variable transmission (CVT), a chain drive system with alternative gear wheel ratios, a belt drive or separate electric drive motors for the two rollers, allowing them to be driven at different speeds.

The film binding material F passes along a feed path from the pre-stretcher device 38 via the pull-off device 44 to the surface of the bale B via a feed opening 58 in the bale chamber 20. The feed opening 58 is located between a pair of adjacent press elements comprising, in this case, an idler roller 60 that supports the belts 16 (if provided) and a driven press roller 62. The feed opening 58 for the binding material is relatively narrow, having a width between the idler roller 60 and the press roller 62 of typically 25-50mm.

The feed opening 58 is located away from the crop mouth 21 through which bale material is introduced into the bale chamber 20. The crop mouth 21 is located between a second press roller 64 and a third press roller 56 below the feed opening 58. The crop mouth 21 is much wider than the feed opening 58, typically having a width of 300-400mm. The feed path along which the film binding material F is fed from the pre-stretcher device 38 to the surface of the bale B is defined by various components of the feed mechanism 42 including the pull-off device 44 and the feed device 50.

During binding of a bale, the bale B is rotated within the bale chamber 20 by the press elements, which may include belts and/or rollers. In the embodiment shown in figure 4 the bale B rotates in a clockwise direction indicated by arrow A and the press elements, which in this embodiment include both belts 16 and rollers (including the idler roller 60 and the driven press rollers 56, 62 and 64), rotate anti-clockwise. A tongue T of the film binding material F is fed into the bale chamber 20 though the feed opening 58, between the two adjacent press elements (idler roller 60 and press roller 62).

The film binding material F is drawn from the reel 32 primarily by rotation of the bale B within the bale chamber 20. The pull-off device 44 is driven during binding of the bale, for example from the drive pulley 65, via the drive belt 66 and the electromagnetic clutch 70 (see figure 2). The drive belt 66 passes around a driven pulley 68, which is connected to the driven roller 46 of the pull-off device 44 via the electromagnetic clutch 70. The output speed of the magnetic clutch 70 can be adjusted by modulating the PWM control signal, which allows the pull-off device 44 to feed film towards the bale chamber at an adjustable feed speed.

Optionally, the pull-off device 44 can be braked by the adjustable brake 47 after the binding material has been severed, to limit or prevent further driving of the binding material by inertia.

During binding of the bale with film binding material, the pull-off device 44 is driven to feed film binding material at a speed that is less than the circumferential speed of the bale B in the bale chamber 20. Typically, the pull-off device 44 may be driven at approximately 90% of the circumferential speed of the bale B. Because the feed speed of the pull-off device 44 is less than the speed at which the film binding material is drawn by the bale, which is substantially equal to the circumferential speed of the bale, the binding material will be stretched between the pull-off device 44 and the bale chamber 20, typically by about 50-150%, ensuring a tight binding. This stretching of the binding material is in addition to any pre-stretching that may have been applied by the pre-stretcher device 38.

If net is used to bind the bale, the net binding material is normally drawn from the supply entirely by rotation of the bale, without activating the pull-off device. However, the pull-off device may also be driven to feed the net at a speed less than the circumferential speed of the bale to apply a small amount of stretch to the net binding material.

If the film binding material starts to tear during binding, the actively-driven pull-off device 44 will continue to rotate, reducing the risk that the film binding material will tear across its full width.

During binding of the bale the feed device 50 is located in a binding position, which is approximately mid-way between the pull-off device 44 and the feed opening 58, where it serves to guide the film binding material F from the pull-off device to the feed opening.

Optionally, during binding of the bale B the reel 32 may be located in the horizontal binding position so that the axis of the reel 32 is substantially parallel to the axes of the feed guide rollers 49, 49', the axis of the pull-off device 44, the axes of the rollers 60-64 and longitudinal axis the cylindrical bale B. Therefore, there is no twisting of the plane of the film binding material F as it passes from the reel 32 to the surface of the bale B. This ensures that the film binding material F is spread to its full width as it is applied to the bale.

In this embodiment two strips of film binding material F are applied side by side to the cylindrical surface of the bale B to cover the width of the bale B. Alternatively, a single strip or more than two strips of film binding material F may be applied to bind the bale.

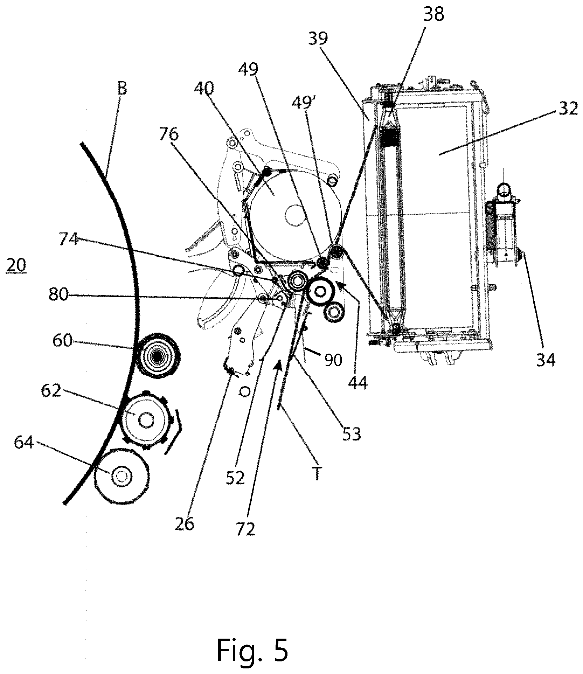

Once binding of the bale has been completed, the feed device 50 is retracted and the cutter 26 is activated to cut the binding material F, so that the bound bale B can be ejected from the bale chamber 20. The configuration of the feed mechanism 42 after the film binding material F has been cut is illustrated in figure 5.

It should be noted that in this embodiment the reels 32 of film binding material F have been rotated through 90 degrees from the horizontal binding position shown in figure 4 to a vertical bundling position, in which the axis of the supply guide roller 39 is perpendicular to the axes of the feed guide rollers 49, 49'. As a result, the film binding material F is gathered together to form a narrow strip of bundled film binding material as it passes over the feed guide rollers 49, 49'. The bundled strip of film binding material typically has a width of only 10-15mm, compared to a width of typically 650mm for the unbundled film binding material. Bundling of the film is optional and may be omitted if not required.

The bundled strip of film binding material passes through the pull-off device 44 and into the feed device 50. When the feed device 50 is in the fully retracted position it adopts an open configuration as shown in figure 5, where the two lips 52, 53 are spaced apart to form a substantially vertical open passageway 72.

Optionally, the feed device 50 may be opened when it reaches the retracted position by the engagement of a roller 74 with a fixed part 76 of the frame of the baler. This causes the lower lip 53 to pivot open about a pivot 80. When the feed device 50 is in the open configuration, the pull-off device 44 can be driven to feed a length of film binding material F through the feed device 50 to increase the length of the cut end of the film binding material that extends from the front end of the feed device 50. If the film material has been bundled this cut end of bundled film binding material forms a relatively stiff tongue T of film binding material that extends from the end of the feed device 50.

The length of the tongue T can be adjusted by controlling operation of the pull-off device 44, for example by adjustable braking of the pull-off device and/or by operation of the electromagnetic clutch 70. Optionally, operation of the pull-off device 44 can be controlled automatically for example by an electronic control system or a computer based on a number of factors including, for example, one or more of the following factors: a user setting for a long or short tongue, the PTO speed, the stretch setting of the pre-stretcher device 38, and environmental conditions such as temperature or humidity.

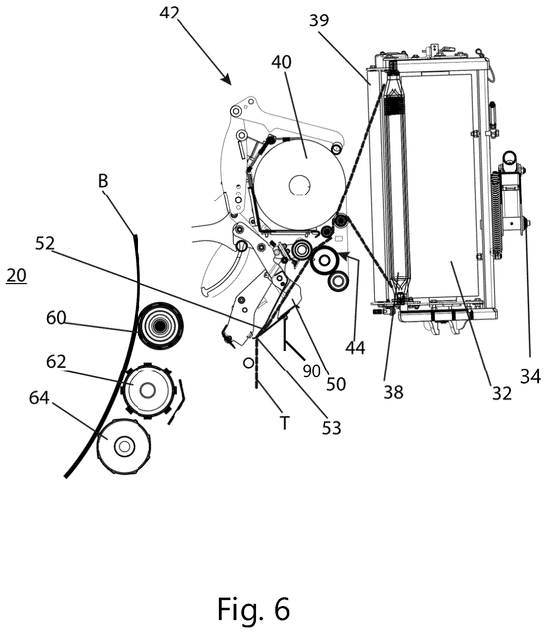

Figure 6 illustrates the feed mechanism 42 in a holding configuration, which it adopts while a bale is being formed in the bale chamber 20. The feed device 50 has moved forward from the retracted position shown in figure 5 and the upper and lower lips 52, 53 have closed, gripping the tongue T of film binding material that extends from the feed device. Because the feed device 50 is closed, the cut end of the film material is held securely and cannot blow around, for example in windy conditions. Also, because the feed device 50 is closed, dust and dirt from the baler cannot enter the mouth of the feed device.

Figure 7 illustrates the feed mechanism 42 in the feeding position, in which the cut end of the film binding material (the tongue T) is fed by the feed device 50 into the bale chamber 20 through the feed opening 58. The feed device 50 has pivoted forwards towards the bale chamber 20 so that the tongue T is caught between the rotating bale B and the press roller 62, thus drawing the film binding material into the bale chamber 20. It will be noted that the feed device 50 extends into the narrow feed opening 58 between the press elements (rollers) 60, 62, so that the position of the tongue T is closely controlled.

The tongue T is optionally formed from bundled film binding material, which has a much greater stiffness that unbundled film binding material. This makes it easier to control the position of the tongue during feeding. The length of the tongue T may be controlled by operating the pull-off device 44 as described above, to ensure that it passes correctly through the feed opening 58 and is caught by the bale B.

As the feed device 50 moves forwards from the holding position to the feed position, the pull-off device 44 is driven by the arc gear 84 to draw film binding material from the supply device 28. The pull-off device 44 is configured to draw a length of film binding material that is less than the length required to accommodate movement of the feed device 50 from the holding position to the feed position. As a result, the tongue T is partially drawn back into the mouth of the feed device 50, which causes the tongue T to stand up in a more erect position. This allows it to be fed more accurately through the feed opening 58. The length of the tongue T is sufficient to allow it to be caught between the rotating bale B and the press roller 62, so that the film binding material is drawn around the cylindrical surface of the bale B as it rotates.

Once the tongue T of film binding material has been caught by the bale B, binding of the bale can commence. The feed mouth 50 is partially retracted from the feed opening 58 to the binding position shown in figure 4. In this embodiment the reel 32 of film binding material is rotated to the horizontal binding position so that the film binding material F is not bundled as it is drawn off the reel. The film binding material F is stretched by the pre-stretching device 38, to increase the length of the film binding material, for example by a stretch ratio of about 55-75%. The pull-off device 44 is activated to draw film from the supply, but it is driven to feed the binding material at a speed S1 that is less that the circumferential speed SB of the bale in the bale chamber, so that the film is additionally stretched by about 50-150% as it is drawn into the bale chamber 20 by rotation of the bale B. In the event that the film binding material starts to tear, the pull-off device 44 will continue to feed the film towards the bale chamber, to ensure that the tear does not spread across the entire width of the film.

The film binding material F passes through the feed device 50 and is drawn over the edges of the upper lip 52, which spreads the film so that the two strips of film cover the full width of the bale. Most of the stretching of the film takes place as the film is drawn over the edges of the upper lip 52, owing to friction between the film and the lip. Thus, the maximum tension occurs in the section of the film between the lip and the bale. The total amount of stretching is controlled by adjusting the degree of slippage in the clutch 70, thereby adjusting the difference between the feed speed S1 of the film by the pull-off device 44 and the speed at which the film is drawn into the bale chamber by rotation of the bale at the circumferential speed SB. Binding continues until an adequate thickness of film binding material has been applied to the cylindrical surface of the bale B. Typically, this may require three to five layers of film binding material.

Once binding of the bale has been completed, the reel 32 of film binding material F may optionally be rotated back to the vertical bundling position shown in figure 5, so that the film binding material is gathered together into a narrow, bundled strip. The speed of the pull-off device 44 is then increased, preferably to feed the binding material at a feed speed S2 that is greater than S1 and optionally greater than the circumferential speed SB of the bale in the bale chamber, to reduce stretching of the film. The cutter device 26 is then activated to cut the film between the feed device 50 and the feed opening 58, and the brake 47 is applied to halt rotation of the pull-off device 44. The feed device 50 is then retracted fully, causing the feed device to open. The bound bale can then be ejected from the bale chamber 20.

As the film binding material F has been stretched by the pre-stretcher device 38, it is under tension. Therefore, when the film binding material is cut, the tongue T contracts into the feed device 50 towards the pull-off device 44. The feed speed of the pull-off device 44 is increased prior to cutting to the tension in the binding material and prevent the tongue T from springing back excessively.

After cutting, the pull-off device 44 is actuated to feed an additional length of film binding material towards the feed device 50, to increase the length of the tongue T that extends from the end of the feed device 50. As the mouth of the feed device 50 is open, the film binding material falls freely through the passageway 72. Once the correct length of the tongue T has been fed through the feed device 50, the pull-off device 44 is deactivated, for example by disengaging the electromagnetic clutch 70.

Optionally, the feed device 50 may then be moved forward from the fully retracted position to the holding position shown in figure 6. As it moves to this position, the mouth of the feed device 50 closes, gripping the tongue T of film material between the lips 52,53. The feed device 50 remains in the holding position until the next bale has been formed in the bale chamber 20.

Upon completion of the bale, the feed device 50 moves to the feed position shown in figure 7 to repeat the binding process. During movement of the feed mouth 50 from the holding position shown in figure 5 to the feeding position shown in figure 7, the pull-off device 44 is driven by an arc gear 84 to draw a length of film binding material that is less than the length required to accommodate movement of the feed mouth 50 from the holding position to the feed position, so that the tongue T is drawn partially back into mouth of the feed device 50. This causes the tongue T to adopt an erect position in which it can be inserted more easily into the feed opening 58.

In an embodiment of the invention, the baler is configured to form a round bale by implementing a baling process that includes a bale-forming phase in which a bale is formed, a binding phase in which the bale is bound with a binding material, and a cutting phase in which the binding material is cut.

The pull-off device 44 is configured to feed the binding material at a first feed speed S1 during the binding phase and at a second feed speed S2 during the cutting phase, where S2 is greater than S1. The cutting phase may include first increasing the feed speed of the pull-off device 44 and then activating the cutter 26 to cut the binding material. Increasing the feed speed of the pull-off device 44 from S1 to S2 during the cutting phase reduces the tension in the binding material before it is cut, thereby reducing the risk that the cut end of binding material will spring back and cause an obstruction in the feed mouth or become wound around the feed mechanism. Optionally, S2 is equal to E.S1 where E is a coefficient in the range 1.05 to 1.25.

Optionally, during the binding phase the bale B rotates in the bale chamber with a circumferential speed SB, where SB is greater than S1. This increases the tension in the binding material. Optionally, SB is equal to D.S1 where D is a coefficient in the range 1.50 to 2.50.

Optionally, the pull-off device 44 may be configured to feed the binding material at a third feed speed S3 during part of the binding phase, where S3 is different from S1. By varying the feed speed during the binding phase the tension in the binding material in different parts of the binding can be adjusted. For example, a first layer of the binding can have a lower tension than a second layer, to reduce the risk of tearing. The pull-off device 44 may also be configured to feed the binding material at a fourth feed speed S4 during a feeding phase of the baling process, during which a cut end of the binding material is introduced into the bale chamber prior to the binding phase.

In the embodiments described above, the binding material is described primarily as film binding material. However, the invention is also applicable to other types of binding material including net binding material.

The invention is primarily described in relation to a baler that includes a bundling device for bundling the binding material to produce a bundled tongue. However, the invention is also applicable to balers that do not have a bundling device, in which an unbundled tongue of binding material is fed into the bale chamber.

The feed device 50 is described above primarily as a feed mouth that includes upper and lower feed elements/lips 52, 53. Alternatively, the feed device may include only a single feed element equivalent to the lower feed element 53, which may for example take the form of a plate, the upper feed element 52 being omitted.

A second embodiment of the invention is illustrated in figure 9. This embodiment is identical to the first embodiment shown in figures 1-8, except as described below.

As shown in figure 9, a speed sensor 90 is provided for monitoring the speed of the film binding material F at the pull-off device 44 as it is supplied to the bale chamber 20 during the binding process.

In this embodiment the speed sensor 90 comprises a freely rotatable detection roller 92, which extends across the width of the baler between the two pivot arms 54. Optionally, the detection roller 92 may be divided lengthwise into two parts 92a, 92b so that if two strips of film binding material F are used to bind the bale, each of the roller parts 92a, 92b contacts one of the strips of film binding material F. In this embodiment the detection roller 92 is located in the upper part of the feed mouth 50, just behind the rear edge of the upper lip 52. However, it may alternatively be mounted elsewhere, for example between the feed rollers 46,48 and the feed mouth 50.

The detection roller 92 is located in the path of the film binding material F and it is positioned so that the film binding material F runs over the surface of the detection roller 92 during the binding process. Contact with the film binding material causes the detection roller to 92 rotate as the binding material is drawn into the bale chamber 20 by rotation of the bale B.

Rotation of the detection roller 92 is detected by at least one rotation sensor 94, which is associated with the detection roller 92, to detect rotation thereof. Various kinds of sensor can be used for the rotation sensor 94. For example, the rotation sensor 94 may comprise an optical sensor that detects light reflected from a mark 96 provided on the surface of the detection roller 92, or it may comprise a magnetic sensor that senses a magnetic marker on the roller, or a Hall-effect sensor, or a contact sensor, or numerous other kinds of sensor.

Instead of a detection roller, the speed sensor 90 may comprise a non-contact sensor that senses movement of the film binding material as the binding material is drawn into the bale chamber, without contacting the binding material. For example, a non-contact speed sensor 90 may comprise an optical sensor, an ultrasonic sensor, a Doppler sensor or any other suitable sensor. Alternatively, the speed sensor 90 may be configured to sense the rotational speed of one of the rollers 46, 48 of the pull-off device.

The speed sensor 90 may be configured to provide a control signal that indicates the speed at which the film binding material F is delivered to the bale chamber 20 by the pull-off device. The speed sensor 90 may be connected to the controller 100, which receives the control signal from the speed sensor 90. The speed sensor 90 may be connected to the control device 100 by a hard connection or a wireless connection. For example, the speed sensor 90 may be connected to the control device 100 by a control line, for example a wire or optical fibre, or it may be connected wirelessly, for example by Wi-Fi or a Bluetooth^{™} connection, or by any other suitable connection means.

## Claims

1. A baler configured to form a round bale (B) by implementing a baling process that includes a bale-forming phase in which a bale (B) is formed, a binding phase in which the bale (B) is bound with a binding material (F), and a cutting phase in which the binding material (F) is cut, the baler comprising:
a bale chamber (20) in which a bale (B) is formed during the bale-forming phase,
a bale drive mechanism that rotates the bale (B) in the bale chamber (20) with a circumferential speed SB,
a binding mechanism that binds a bale (B) in the bale chamber (20) during the binding phase by wrapping a binding material (F) around a circumferential surface of bale, where the binding material is a stretch film binding material (F), and
a cutter device (26) that cuts the binding material (F) during the cutting phase,
the binding mechanism including:
a supply device (28) that holds a supply of binding material (F) and
a feed mechanism (42) that feeds the binding material (F) from the supply device (28) to the bale chamber (20),
wherein the feed mechanism (42) includes at least one pull-off device (44) that draws binding material (F) from the supply device (28) and feeds the binding material (F) to the bale chamber (20), wherein the pull-off device (44) comprises a rotary drive element (46) and a rotary drive that drives rotation of the rotary drive element (46), and wherein the pull-off device (44) is configured to feed the binding material (F) at a first feed speed S1 during at least a part of the binding phase and at a second feed speed S2 during the cutting phase, where S2 is greater than S1 and S2 is greater than the circumferential speed SB of the bale during the cutting phase, **characterised in that** the rotary drive actively drives rotation of the rotary drive element (46) during at least part of the binding phase and the cutting phase, thereby ensuring that the binding material (F) is drawn from the supply device (28) and fed to the bale chamber (20) at a controlled speed during both phases of the binding process.

2. A baler according to claim 1, wherein S2 is equal to E*S1 where E is a coefficient in the range 1.2 to 4.0.

3. A baler according to claim 1 or claim 2, wherein the circumferential speed SB of the bale during the binding process is greater than S1.

4. A baler according to claim 3, wherein the circumferential speed SB of the bale during the binding process is equal to D*S1 where D is a coefficient in the range 1.5 to 2.5.

5. A baler according to any preceding claim, wherein S2 is equal to F multiplied by the circumferential speed SB of the bale during the cutting phase, where F is a coefficient in the range 1.05 to 1.25.

6. A baler according to any preceding claim, wherein the pull-off device (44) is configured to feed the binding material (F) at a third feed speed S3 during at least one different part of the binding phase, where S3 is different from S1.

7. A baler according to any preceding claim, wherein the pull-off device (44) is configured to feed the binding material (F) at a fourth feed speed S4 during a feeding phase of the baling process, during which a cut end of the binding material is introduced into the bale chamber (20) prior to the binding phase.

8. A baler according to any preceding claim, including a controller (100) that controls operation of the pull-off device (44) during each phase of the baling process.

9. A baler according to claim 8, wherein the controller (100) includes an operator interface (102) that allows an operator to adjust one or more of the feed speeds of the pull-off device (44).

10. A baler according to any preceding claim, wherein the rotary drive comprises a clutch (70) that transfers rotary drive to the at least one rotary drive element (46), wherein the clutch (70) is configured to control the feed speeds of the pull-off device (44) by adjusting a slippage ratio within the clutch (70).

11. A baler according to claim 10, wherein the clutch (70) is an electromagnetic clutch and the slippage ratio is controlled by a PWM control signal delivered to the electromagnetic clutch (70).

12. A baler according to any preceding claim, wherein the supply device (28) includes a pre-stretcher device (38) that stretches the binding material (F) before it reaches the feed mechanism.

13. A baler according to claim 12, wherein the pre-stretcher device (38) is configured to stretch the binding material lengthwise by a factor in the range 1.55 to 1.75, and/or the pre-stretcher device (38) and the feed mechanism (42) are configured to stretch the binding material (F) lengthwise by a combined factor in the range 1.85 to 4.0.

14. A baler according to any preceding claim, wherein the feed mechanism (42) includes a feed device (50) between the pull-off device (44) and the bale chamber (20), which is configured to transfer a cut end of the binding material (F) to the bale chamber (20).

15. A baler according to any preceding claim, wherein the feed device (50) is configured for movement relative to the supply device (28) between a feed position adjacent a feed opening (58) of the bale chamber, which the feed device (50) adopts when feeding binding material (F) into the bale chamber (20), and a retracted position spaced from the feed opening (58).

## Patentansprüche

1. Eine Ballenpresse, die konfiguriert ist, um einen Rundballen (B) zu bilden, indem sie einen Ballenpressvorgang umsetzt, der eine Ballenbildungsphase, in der ein Ballen (B) gebildet wird, eine Bindephase, in der der Ballen (B) mit einem Bindematerial (F) gebunden wird, und eine Schneidphase, in der das Bindematerial (F) geschnitten wird, umfasst, wobei die Ballenpresse Folgendes beinhaltet:
eine Ballenkammer (20), in der während der Ballenbildungsphase ein Ballen (B) gebildet wird,
einen Ballenantriebsmechanismus, der den Ballen (B) in der Ballenkammer (20) mit einer Umfangsgeschwindigkeit SB dreht,
einen Bindemechanismus, der während der Bindephase einen Ballen (B) in der Ballenkammer (20) bindet, indem er ein Bindematerial (F) um eine Ballenumfangsfläche wickelt, wobei das Bindematerial ein Stretchfolien-Bindematerial (F) ist, und
eine Schneidvorrichtung (26), die während der Schneidphase das Bindematerial (F) schneidet,
wobei der Bindemechanismus Folgendes umfasst:
eine Vorratsvorrichtung (28), die einen Vorrat an Bindematerial (F) hält, und
einen Zuführmechanismus (42), der der Bindekammer (20) das Bindematerial (F) von der Vorratsvorrichtung (28) zuführt,
wobei der Zuführmechanismus (42) mindestens eine Abziehvorrichtung (44) umfasst, die Bindematerial (F) von der Vorratsvorrichtung (28) zieht und das Bindematerial (F) der Ballenkammer (20) zuführt, wobei die Abziehvorrichtung (44) ein Drehantriebselement (46) und einen Drehantrieb, der die Drehung des Drehantriebselements (46) antreibt, beinhaltet und wobei die Abziehvorrichtung (44) konfiguriert ist, um das Bindematerial (F) während mindestens eines Teils der Bindephase mit einer ersten Zuführgeschwindigkeit S1 und während der Schneidphase mit einer zweiten Zuführgeschwindigkeit S2 zuzuführen, wobei S2 größer als S1 ist und S2 größer als die Umfangsgeschwindigkeit SB des Ballens während der Schneidphase ist, **dadurch gekennzeichnet, dass** der Drehantrieb eine Drehung des Drehantriebselements (46) während mindestens eines Teils der Bindephase und der Schneidphase aktiv antreibt, wodurch sichergestellt wird, dass das Bindematerial (F) während beider Phasen des Bindevorgangs mit einer gesteuerten Geschwindigkeit von der Vorratsvorrichtung (28) gezogen und der Ballenkammer (20) zugeführt wird.

2. Ballenpresse gemäß Anspruch 1, wobei S2 gleich E*S1 ist, wobei E ein Koeffizient im Bereich von 1,2 bis 4,0 ist.

3. Ballenpresse gemäß Anspruch 1 oder Anspruch 2, wobei die Umfangsgeschwindigkeit SB des Ballens während des Bindevorgangs größer als S1 ist.

4. Ballenpresse gemäß Anspruch 3, wobei die Umfangsgeschwindigkeit SB des Ballens während des Bindevorgangs gleich D*S1 ist, wobei D ein Koeffizient im Bereich von 1,5 bis 2,5 ist.

5. Ballenpresse gemäß einem der vorhergehenden Ansprüche, wobei S2 gleich F, multipliziert mit der Umfangsgeschwindigkeit SB des Ballens während der Schneidphase, ist, wobei F ein Koeffizient im Bereich von 1,05 bis 1,25 ist.

6. Ballenpresse gemäß einem der vorhergehenden Ansprüche, wobei die Abziehvorrichtung (44) konfiguriert ist, um das Bindematerial (F) während mindestens eines anderen Teils der Bindephase mit einer dritten Zuführgeschwindigkeit S3 zuzuführen, wobei sich S3 von S1 unterscheidet.

7. Ballenpresse gemäß einem der vorhergehenden Ansprüche, wobei die Abziehvorrichtung (44) konfiguriert ist, um das Bindematerial (F) während einer Zuführphase des Ballenpressvorgangs, während der ein abgeschnittenes Ende des Bindematerials vor der Bindephase in die Ballenkammer (20) eingeführt wird, mit einer vierten Zuführgeschwindigkeit S4 zuzuführen.

8. Ballenpresse gemäß einem der vorhergehenden Ansprüche, die eine Steuereinheit (100) umfasst, die den Betrieb der Abziehvorrichtung (44) während jeder Phase des Ballenpressvorgangs steuert.

9. Ballenpresse gemäß Anspruch 8, wobei die Steuereinheit (100) eine Bedienerschnittstelle (102) umfasst, die es einem Bediener ermöglicht, eine oder mehrere der Zuführgeschwindigkeiten der Abziehvorrichtung (44) einzustellen.

10. Ballenpresse gemäß einem der vorhergehenden Ansprüche, wobei der Drehantrieb eine Kupplung (70) beinhaltet, die Drehantrieb an das mindestens eine Drehantriebselement (46) transferiert, wobei die Kupplung (70) konfiguriert ist, um die Zuführgeschwindigkeiten der Abziehvorrichtung (44) durch das Einstellen eines Schlupfverhältnisses innerhalb der Kupplung (70) zu steuern.

11. Ballenpresse gemäß Anspruch 10, wobei die Kupplung (70) eine elektromagnetische Kupplung ist und das Schlupfverhältnis durch ein PWM-Steuersignal gesteuert wird, das an die elektromagnetische Kupplung (70) übermittelt wird.

12. Ballenpresse gemäß einem der vorhergehenden Ansprüche, wobei die Vorratsvorrichtung (28) eine Vorstretchvorrichtung (38) umfasst, die das Bindematerial (F) stretcht, bevor es den Zuführmechanismus erreicht.

13. Ballenpresse gemäß Anspruch 12, wobei die Vorstretchvorrichtung (38) konfiguriert ist, um das Bindematerial in Längsrichtung um einen Faktor im Bereich von 1,55 bis 1,75 zu stretchen, und/oder die Vorstretchvorrichtung (38) und der Zuführmechanismus (42) konfiguriert sind, um das Bindematerial (F) in Längsrichtung um einen kombinierten Faktor im Bereich von 1,85 bis 4,0 zu stretchen.

14. Ballenpresse gemäß einem der vorhergehenden Ansprüche, wobei der Zuführmechanismus (42) zwischen der Abziehvorrichtung (44) und der Ballenkammer (20) eine Zuführvorrichtung (50) umfasst, die konfiguriert ist, um ein abgeschnittenes Ende des Bindematerials (F) zu der Ballenkammer (20) zu transferieren.

15. Ballenpresse gemäß einem der vorhergehenden Ansprüche, wobei die Zuführvorrichtung (50) zwischen einer Zuführposition angrenzend an eine Zuführöffnung (58) der Ballenkammer, die die Zuführvorrichtung (50) beim Zuführen von Bindematerial (F) in die Ballenkammer (20) einnimmt, und einer zurückgezogenen Position, die von der Zuführöffnung (58) beabstandet ist, für eine Bewegung relativ zu der Vorratsvorrichtung (28) konfiguriert ist.

## Revendications

1. Une presse à balles configurée pour former une balle ronde (B) par mise en œuvre d'un processus de mise en balle qui inclut une phase de formation de balle au cours de laquelle une balle (B) est formée, une phase de liage au cours de laquelle la balle (B) est liée à l'aide d'un matériau de liage (F), et une phase de coupe au cours de laquelle le matériau de liage (F) est coupé, la presse à balles comprenant :
une chambre à balle (20) à l'intérieur de laquelle une balle (B) est formée durant la phase de formation de balle,
un mécanisme d'entraînement de balle qui fait tourner la balle (B) dans la chambre à balle (20) à une vitesse circonférentielle SB,
un mécanisme de liage qui lie une balle (B) dans la chambre à balle (20) durant la phase de liage par enveloppement d'un matériau de liage (F) autour d'une surface circonférentielle de balle, le matériau de liage étant un matériau de liage en film étirable (F), et
un dispositif coupeur (26) qui coupe le matériau de liage (F) durant la phase de coupe,
le mécanisme de liage incluant :
un dispositif d'approvisionnement (28) qui porte un organe d'approvisionnement en matériau de liage (F) et
un mécanisme d'alimentation (42) qui alimente la chambre à balle (20) en matériau de liage (F) à partir du dispositif d'approvisionnement (28),
dans laquelle le mécanisme d'alimentation (42) inclut au moins un dispositif de tirage (44) qui extrait du matériau de liage (F) du dispositif d'approvisionnement (28) et alimente la chambre à balle (20) en matériau de liage (F), dans laquelle le dispositif de tirage (44) comprend un élément d'entraînement rotatif (46) et un entraînement rotatif qui entraîne en rotation l'élément d'entraînement rotatif (46), et dans laquelle le dispositif de tirage (44) est configuré pour alimenter en le matériau de liage (F) à une première vitesse d'alimentation S1 durant au moins une partie de la phase de liage et à une deuxième vitesse d'alimentation S2 durant la phase de coupe, S2 étant plus élevée que S1 et S2 étant plus élevée que la vitesse circonférentielle SB de la balle durant la phase de coupe, **caractérisée en ce que** l'entraînement rotatif entraîne activement en rotation l'élément d'entraînement rotatif (46) durant au moins une partie de la phase de liage et de la phase de coupe, ce qui fait en sorte que le matériau de liage (F) est extrait du dispositif d'approvisionnement (28) et que la chambre à balle (20) en est alimentée à une vitesse régulée durant les deux phases du processus de liage.

2. Une presse à balles selon la revendication 1, dans laquelle S2 est égale à E * S1, E étant un coefficient compris dans la gamme allant de 1,2 à 4,0.

3. Une presse à balles selon la revendication 1 ou la revendication 2, dans laquelle la vitesse circonférentielle SB de la balle durant le processus de liage est supérieure à S1.

4. Une presse à balles selon la revendication 3, dans laquelle la vitesse circonférentielle SB de la balle durant le processus de liage est égale à D * S1, D étant un coefficient compris dans la gamme allant de 1,5 à 2,5.

5. Une presse à balles selon n'importe quelle revendication précédente, dans laquelle S2 est égale à F multiplié par la vitesse circonférentielle SB de la balle durant la phase de coupe, F étant un coefficient compris dans la gamme allant de 1,05 à 1,25.

6. Une presse à balles selon n'importe quelle revendication précédente, dans laquelle le dispositif de tirage (44) est configuré pour alimenter en le matériau de liage (F) à une troisième vitesse d'alimentation S3 durant au moins une différente partie de la phase de liage, S3 étant différente de S1.

7. Une presse à balles selon n'importe quelle revendication précédente, dans laquelle le dispositif de tirage (44) est configuré pour alimenter en le matériau de liage (F) à une quatrième vitesse d'alimentation S4 durant une phase d'alimentation du processus de mise en balle, durant laquelle un bout coupé du matériau de liage est introduit dans la chambre à balle (20) préalablement à la phase de liage.

8. Une presse à balles selon n'importe quelle revendication précédente, incluant un appareil de commande (100) qui commande le fonctionnement du dispositif de tirage (44) durant chaque phase du processus de mise en balle.

9. Une presse à balles selon la revendication 8, dans laquelle l'appareil de commande (100) inclut une interface opérateur (102) qui rend possible à un opérateur de régler une ou plusieurs des vitesses d'alimentation du dispositif de tirage (44).

10. Une presse à balles selon n'importe quelle revendication précédente, dans laquelle l'entraînement rotatif comprend un embrayage (70) qui transfère l'entraînement rotatif à l'au moins un élément d'entraînement rotatif (46), dans laquelle l'embrayage (70) est configuré pour réguler les vitesses d'alimentation du dispositif de tirage (44) par réglage d'un taux de patinage au sein de l'embrayage (70).

11. Une presse à balles selon la revendication 10, dans laquelle l'embrayage (70) est un embrayage électromagnétique et le taux de patinage est commandé par un signal de commande MLI délivré à l'embrayage électromagnétique (70).

12. Une presse à balles selon n'importe quelle revendication précédente, dans laquelle le dispositif d'approvisionnement (28) inclut un dispositif pré-étireur (38) qui étire le matériau de liage (F) avant qu'il atteigne le mécanisme d'alimentation.

13. Une presse à balles selon la revendication 12, dans laquelle le dispositif pré-étireur (38) est configuré pour étirer le matériau de liage dans le sens de la longueur d'un facteur compris dans la gamme allant de 1,55 à 1,75, et/ou le dispositif pré-étireur (38) et le mécanisme d'alimentation (42) sont configurés pour étirer le matériau de liage (F) dans le sens de la longueur d'un facteur combiné compris dans la gamme allant de 1,85 à 4,0.

14. Une presse à balles selon n'importe quelle revendication précédente, dans laquelle le mécanisme d'alimentation (42) inclut un dispositif d'alimentation (50) entre le dispositif de tirage (44) et la chambre à balle (20), lequel est configuré pour transférer un bout coupé du matériau de liage (F) jusque dans la chambre à balle (20).

15. Une presse à balles selon n'importe quelle revendication précédente, dans laquelle le dispositif d'alimentation (50) est configuré pour un déplacement par rapport au dispositif d'approvisionnement (28) entre une position d'alimentation adjacente à une ouverture d'alimentation (58) de la chambre à balle, que le dispositif d'alimentation (50) adopte lorsqu'il alimente la chambre à balle (20) en matériau de liage (F), et une position rétractée espacée de l'ouverture d'alimentation (58).
